# EUROPEAN PATENT APPLICATION

(11) **EP 3 597 936 A1**
(43) Date of publication of application: **22.01.2020**
(21) Application number: 18461582.1
(22) Date of filing: 19.07.2018
(51) Int. Cl.: F15B 13/043, F16K 31/06

(54) **ASSEMBLY FOR USE IN A SERVOVALVE**

(71) Applicant: Hamilton Sundstrand Corporation, Charlotte, NC 28277 (US)
(72) Inventor: Sawicki, Piotr, 66-450 Bogdaniec (PL); Zak, Maciej, 51-317 Wroclaw (PL)
(74) Representative: Dehns

(57) **Abstract**

An assembly for use in a servovalve (200) is provided. The assembly includes: a moveable member (228) having a first end (232) and a second end (234), the moveable member (228) extending along a longitudinal axis (A'-A') from the first end (232) to the second end (234); and a torsion bridge (238), the torsion bridge (238) extending around the moveable member (228) at the first end (232) thereof, and being adapted to rotate about a rotation axis (Aᵣ),wherein the rotation axis (Aᵣ) extends perpendicular to the longitudinal axis (A'-A'), and wherein the moveable member (228) and the torsion bridge (238) form an integral part having a planar surface (264) adapted to receive a planar surface (266) of an armature (240).

## Description

### Technical Field

The present invention relates to servovalves and to assemblies for use therein.

### Background

Servovalves are typically used to control air or other fluid flow to effect driving or control of another part, e.g. an actuator.

A servovalve typically comprises a first subsystem comprising a torque motor which acts as a driver to a second subsystem. The second subsystem may contain a fluid such as fuel, hydraulic fluid or pneumatic fluid and comprises a valve mechanism which may control flow of the fluid. In one example, the fluid can be a hydraulic fluid and the torque motor may operate to position a moveable member, such as a flapper, in response to an input drive signal or control current, to drive the valve mechanism. The valve mechanism may in turn control flow of the hydraulic fluid to an actuator for driving a load.

The torque motor typically comprises a torsion bridge and an armature plate which cause the flapper to move when the torque motor is activated. It is known to provide an aperture in the armature such that the flapper extends through the aperture and is joined to the armature by brazing. The aperture in the armature plate causes a saturation in magnetic flux density adjacent the aperture when the torque motor is activated, thus reducing the efficiency of the torque motor. Designers are being challenged to provide an assembly for a servovalve which allows for a more constant magnetic flux density to be produced across an armature thus improving performance of the servovalve.

In addition to the above, the second subsystem may be sealed to avoid leakage of fluid therefrom, which would have a detrimental effect on both safety and performance. It is known to seal the second subsystem by providing an O-ring seal between a chimney of the body of the second subsystem and the flapper. This requires a groove for receiving the O-ring to be provided within the chimney. The relatively long, narrow dimensions of the chimney provide the challenges of small component parts, tight tolerances and restricted access to control the quality of the groove. Designers are being challenged to provide a seal for a servovalve which is quicker, less expensive and less complex to produce.

The present disclosure seeks to address these challenges.

### Summary

According to an aspect of the disclosure there is provided an assembly for use in a servovalve, the assembly comprising:
a moveable member having a first end and a second end, the moveable member extending along a longitudinal axis from the first end to the second end; and
a torsion bridge, the torsion bridge extending around the moveable member at the first end thereof, and being adapted to rotate about a rotation axis,
wherein the rotation axis extends perpendicular to the longitudinal axis, and
wherein the moveable member and the torsion bridge form an integral part having a planar surface adapted to receive a planar surface of an armature.

Thus it will be seen by those skilled in the art that, in accordance with the present disclosure, the torsion bridge and the moveable member together form an integral part having a planar surface. This allows an armature to rest against the planar surface and be joined thereto. This provides a simpler and less time consuming way of joining the armature to the moveable member than the prior art arrangement in which an aperture is formed in the armature and the moveable member extends through the aperture.

In addition, as no aperture is required in the armature, an armature having a substantially constant magnetic flux density along the extent thereof may be provided.

According to examples of the present disclosure, the moveable member may be joined to the torsion bridge so as to form an integral part therewith. The join may be formed by any suitable method such as, for example, by welding or brazing. Preferably however, the moveable member and the torsion bridge are formed as a single part. Thus, the moveable member and the torsion bridge may be manufactured as a single part, for example by using Laser Powder Bed Fusion, such that no join need be formed between the moveable member and the torsion bridge. This provides a relatively simple and cost effective way of producing the assembly of the disclosure.

As the armature of the assembly does not require any apertures to be formed therein, the armature may have greater mechanical strength than in previously known assemblies. This allows the first and second torsion shafts to extend for a greater distance along the rotation axis than would previously have been possible. When the torsion bridge rotates, stresses occur in the torsion shafts. Greater stresses are generated in shorter torsion shafts, because the torsion shafts act as a mechanical spring, the stiffness of which will increase with reducing shaft length. Thus, the stresses in the torsion shafts can be reduced by providing the first and second torsion shafts which extend for a greater distance along the rotation axis than would previously have been possible. The reduced stresses will result in an increased fatigue life of the torsion bridge.

In addition, in one example of the disclosure, the shafts may be produced by machining, with final machining to tight tolerances on the torsion shafts. The longer torsion shafts which are possible with the present disclosure allow shafts having a greater diameter than would previously have been possible to be used. This can make the shafts easier to manufacture as thin shafts (for example having a diameter of 1.5 mm) are difficult to manufacture to a required tolerance.

In any example of the present disclosure, the assembly may be adapted to receive a part of a valve system of a servovalve therein and to provide a seal between the part and the assembly when in-situ in a servovalve.

In one example, the part could comprise a hollow cylinder into which the moveable member extends and the seal could be provided between the part and the moveable member. Preferably however, the seal is provided between the torsion bridge and the part.

In any example of the present disclosure, the assembly may further comprise an armature, a first planar surface of the armature lying adjacent and parallel to the planar surface.

Preferably, the first surface of the armature is joined to the planar surface by brazing. Due to the braze being provided between the adjacent planar surfaces of the armature and the integral part, it is relatively straightforward to form the braze.

The armature could take any acceptable form. Preferably however, the armature comprises a solid body with a substantially constant cross section. Thus in the preferred example, no apertures are formed in the armature. This allows a substantially constant magnetic flux density to be achieved along the extent of the armature in use.

According to a further aspect of the present disclosure, a servovalve comprising an assembly as claimed in any preceding claim is provided.

The servovalve may further comprise a valve system comprising a body containing a fluid, the body having a hollow chimney extending about the longitudinal axis,
wherein the moveable member extends into the hollow chimney, and
wherein a seal is provided between the hollow chimney and the torsion bridge.

The seal in any example of the present disclosure could take many different forms. For example, a foam seal could be used. Preferably however, the seal comprises an O-ring seal.

In any example of the present disclosure, the torsion bridge may comprise a recess therein for receiving the seal. The relatively larger dimensions of the torsion bridge allow the recess to be formed to required tolerances in a relatively simple and cost effective manner.

In any example of the present disclosure, the torsion bridge may comprise:
a main body extending around the first end of the moveable member;
a first torsion shaft extending from the main body along the rotation axis in a first direction; and
a second torsion shaft extending from the main body along the rotation axis in a second direction.

In any example of the present disclosure, the main body comprises:
a first surface comprising the planar surface; and
side walls extending from the first surface,
wherein the moveable member extends away from the first surface and the recess extends between the moveable member and the side walls.

In any example of the present disclosure, the moveable member may be cylindrical.

Preferably, the recess between the moveable member and the side walls may be annular.

The recess could be of a constant width over the full longitudinal extent of the side walls. In any example of the present disclosure however, the side walls may extend parallel to the longitudinal axis from the first surface and then curve towards the moveable member. It will be understood that by curving inwardly the side walls reduce the width of the recess such that the gap between the side walls and the moveable member is reduced as the side walls curve inwardly.

Features of any example described herein may, wherever appropriate, be applied to any other examples of the present disclosure. Where reference is made to different examples, it should be understood that these are not necessarily distinct but may overlap.

### Detailed Description

One or more non-limiting examples will now be described, by way of example only, with reference to the accompanying drawings in which:
Figure 1 is a cross-sectional view of a servovalve according to examples typical of the prior art;
Figure 2 is an exploded perspective view of an armature, torsion bridge and moveable member according to examples typical of the prior art;
Figure 3 is a cross-sectional view of a servovalve according to an example of the present disclosure along a first plane through the centre thereof;
Figure 4 is a cross-sectional view of the servovalve of Figure 3 along a second plane through the centre thereof and perpendicular to the first plane;
Figure 5 is an exploded perspective view of the armature, torsion bridge and moveable member of the servovalve of Figure 3; and
Figure 6 is a cross section through the armature, torsion bridge and moveable member of the servovalve of Figure 3.

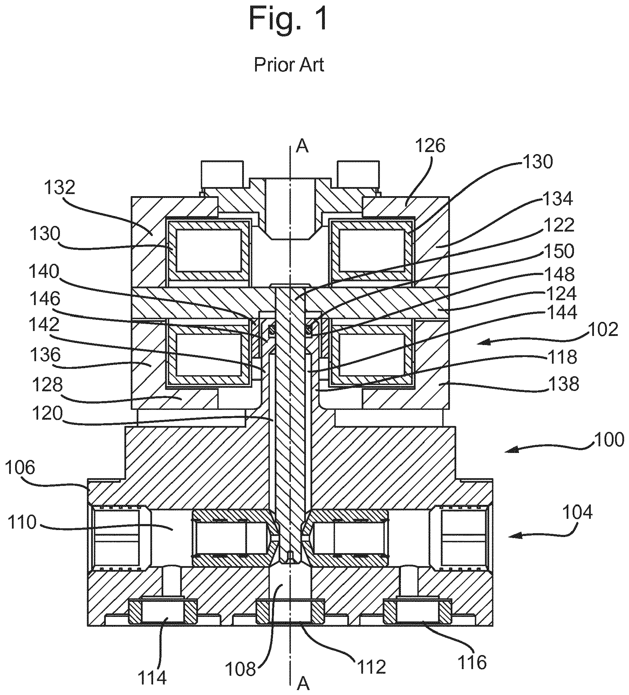

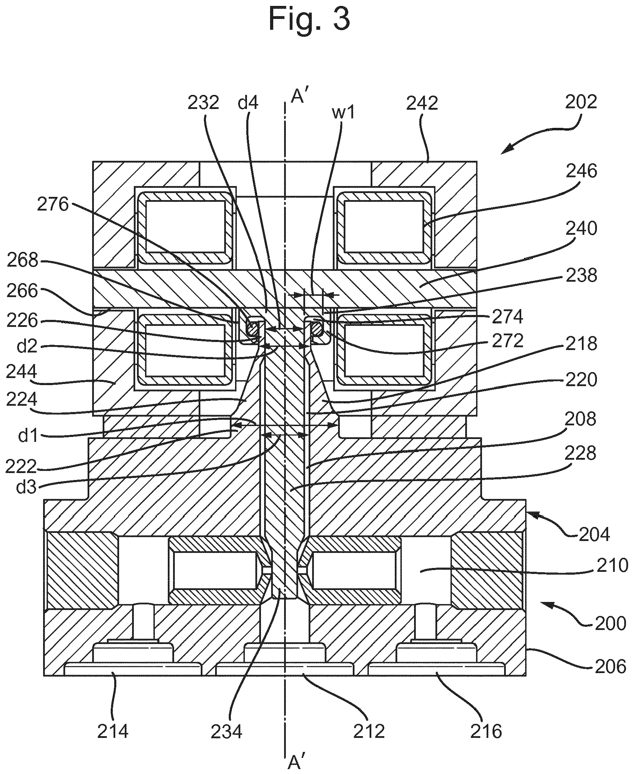

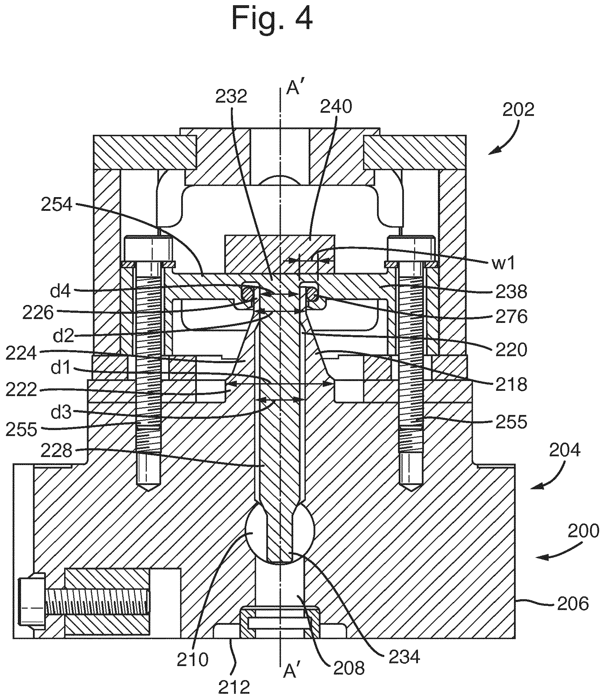

As is known in the art, a servovalve is a device used for regulating either the flow rate or pressure gain at the receiving end of a system, i.e. some kind of actuator. It is controlled by a power signal supplied to the coils of a torque motor. For reference, an example of one type of conventional servovalve is depicted in Figure 1. The new assembly described herein may be used with the type of servovalve shown in Figure 1, as illustrated in Figure 3 and described below, but is not limited to this, and may also be used with other types of servovalves. The servovalve depicted in Figures 1 and 3 is therefore one example of a servovalve with which the new assembly as described later and shown in Figures 3 and 4 can be used.

Figure 1 shows a cross section through a servovalve 100 comprising a first subsystem 102 for driving a second subsystem or valve system 104 containing a fluid such as hydraulic fluid, fuel or pneumatic fluid. In the example shown, the fluid is hydraulic fluid. The first subsystem 102 comprises a torque motor. The servovalve 100 is assembled about a longitudinal axis A-A as shown in Figure 1.

The valve system104 comprises a body 106 centred on the longitudinal axis A-A. A first cylindrical passage 108 extends through the body 106 along the longitudinal axis A-A. A second cylindrical passage 110 extends across the body 106 and intersects the first cylindrical passage 108 perpendicular thereto. Ports 112, 114, 116 are provided in the body as is known in the art.

A hollow cylindrical chimney 118 is formed integrally with the body 106 and extends therefrom so as to form a second cylindrical passage 120 which is coaxial and continuous with the first cylindrical passage 108.

The valve system 104 further comprises a moveable member (in this example, a flapper) 122 which is cylindrical in shape, and an armature plate 124 which is substantially rectangular in cross section. The armature plate 124 is mounted such that in its resting position, the longitudinal axis (L-L) thereof extends perpendicular to the longitudinal axis A-A and parallel to the second cylindrical passage 110. The flapper 122 extends along the longitudinal axis A-A, through an aperture 123 in the armature plate 124 and through the second cylindrical passage 120 into the first cylindrical passage 108. When the torque motor is not activated and the armature plate 124 is in its resting position, the flapper 122 extends into the first cylindrical passage 108 and is in line with the control port 112.

The first subsystem 102 comprises a torque motor having a first annular pole piece 126 and a second annular pole piece 128. The first subsystem 102 further comprises coils 130 wrapped around the armature plate 124 on either side and spaced from the centre thereof. Permanent magnets (not shown) are also provided on opposite sides of the armature plate 124. The coils 130 are connected via lead wires (not shown) to a source of electricity (not shown) to thereby provide an electrical current to the coils 130.

The torque motor is an electromagnetic circuit such that in operation, current flowing through the coils 130 creates an electromagnetic force acting on the armature plate 124. The armature plate 124 is fixed to and supported on a torsion bridge 140 which extends perpendicular to the longitudinal axis A-A and the longitudinal axis (L-L) of the armature plate 124. The torsion bridge 140 twists when torque is applied to it and so the torsion bridge 140, armature plate 124 and flapper 122 rotate due to the current flowing through the coils 130.

Both to ensure safety and for good operation of the servovalve, it is important that the valve system 104 is sealed against leakage of fluid therefrom. It is known to achieve a seal using an O-ring to seal between the surface of the second cylindrical passage 120 and the flapper 122. As seen in Figure 1, the hollow cylindrical chimney 118 comprises a first portion 142 extending from the body 106 in which the diameter of the second cylindrical passage 120 is greater than the diameter of the flapper 122 such that an annular gap 144 is formed between the flapper 122 and the wall of the second cylindrical passage 120. The hollow cylindrical chimney 118 further comprises a second portion 146 extending axially from the first portion 142 in which the diameter of the second cylindrical passage 120 is narrower than in the first portion 142, such that the gap between the flapper 122 and the wall of the second cylindrical passage 120 is reduced in the second portion 146 of the hollow cylindrical chimney 118. An annular groove 148 is formed in the wall of the second portion 146 of the hollow cylindrical chimney 118 to receive an O-ring 150 therein.

In the known servovalve as shown in Figure 1, the relatively small dimensions lead to relatively time consuming and expensive manufacturing processes.

In order to manufacture a servovalve according to the example of Figure 1, the annular groove 148 must be machined in the hollow cylindrical chimney 118. This is a relatively time consuming and expensive process due to the narrow diameter of the chimney 118 making access thereto relatively difficult.

In addition to the above, where parts are to be connected together by brazing, a nickel plating must be applied thereto. However, contact between the O-ring and nickel could cause damage to the O-ring. Consequently, it has been necessary to mask parts of the flapper which come into contact with the O-ring prior to nickel plating, this again increasing manufacturing costs.

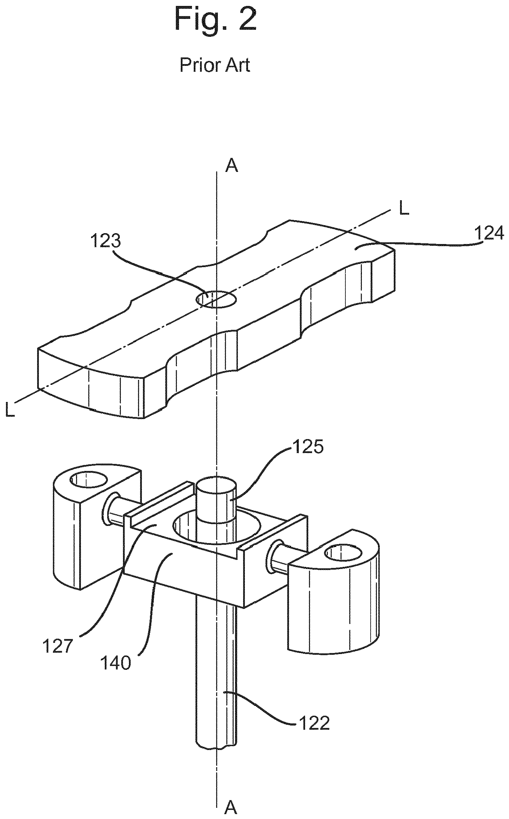

Further, the provision of an aperture 123 in the armature 124 leads to a saturation in magnetic flux in the armature adjacent the aperture in use. This reduces the efficiency of the torque motor. Additionally, in the arrangement of Figure 1, the external surface of the flapper 122 is brazed to the internal surface of the aperture 123. This is relatively difficult to achieve as the gap between the flapper 122 and the internal surface of the aperture 123 may vary. The area 125 of the external surface of the flapper 122 to which the braze is applied is shown in Figure 2. A braze is also applied to a surface 127 of the torsion bridge 140 on which the armature pate 124 rests in use.

A new assembly for use in a servovalve and a new type of servovalve is now described with reference to Figures 3 to 6. Figures 3 and 4 show cross sections through a servovalve 200 according to an example of the present disclosure. The servovalve 200 comprises a first subsystem 202 for driving a valve system 204 containing a fluid such as hydraulic fluid, fuel or pneumatic fluid. In the example shown, the fluid is hydraulic fluid. A nominal operating pressure within the valve system may be up to 500 psi, with a maximum operating pressure of 1500 psi. The servovalve 200 is assembled about a longitudinal axis A'-A'.

The valve system 204 comprises an aluminium body 206 which is substantially the same as the box shaped body 106 shown in Figure 1.

As in the example of Figure 1, a first cylindrical passage 208 extends through the body 206 along the longitudinal axis A'-A'. A second cylindrical passage 210 extends across the body 206 and intersects the first cylindrical passage 208 perpendicular thereto. A control port 212 extends axially in line with the first cylindrical passage 208 into the body 206. A supply port 214 and a return port 216 are provided on either side of the control port 212 and extend into the body 206 parallel to the first cylindrical passage 208 to join with the second cylindrical passage 210.

A hollow chimney 218 is formed from aluminium and is integral with the body 206. The hollow chimney 218 extends outwardly from the body 206 so as to form a third cylindrical passage 220 which is coaxial and continuous with the first cylindrical passage 208.

In the example shown in Figures 3 and 4, the hollow chimney 218 comprises a first cylindrical portion 222 extending from the body 206 along the longitudinal axis A'-A'. The hollow chimney further comprises a second frustoconical portion 224 extending from the first cylindrical portion 222 along the longitudinal axis A'-A'. A third cylindrical portion 226, having a smaller outer diameter d₂ than the outer diameter d₁ of the first cylindrical portion 222, extends from the second frustoconical portion 224 along the longitudinal axis A'-A'.

The third cylindrical passage 220 runs through the hollow chimney 218 along the longitudinal axis A'-A'. As can be seen in Figures 3 and 4, the diameter d₃ of the third cylindrical passage 220 in the first and second portions 222, 224 of the hollow chimney 218 is greater than the diameter d₄ of the third cylindrical passage 220 in the third portion 226 of the hollow chimney 218.

The valve system 204 further comprises a moveable member, in the example shown, a flapper 228 which is cylindrical in shape and is formed from austenitic stainless steel.

The flapper 228 comprises a first end 232 and a second end 234. When the servovalve is assembled, the flapper 228 extends along the longitudinal axis A'-A', through the third cylindrical passage 220 and into the first cylindrical passage 208 such that the second end 234 thereof extends across the second cylindrical passage 210. In its resting position, the flapper 228 extends into the first cylindrical passage 208 and is in line with the control port 212. With the flapper 228 in its resting position, fluid in the valve system 204 flows from the supply port 214 to the control port 212 and the return port 216.

The first subsystem 202 comprises a torque motor having a torsion bridge 238 and an armature plate 240 which is substantially rectangular in cross section. The armature plate 240 is mounted such that in its resting position, the longitudinal axis thereof (L'-L') extends perpendicular to the longitudinal axis A'-A' and parallel to the second cylindrical passage 210.

The torsion bridge 238 can be formed of austenitic stainless steel. In some examples of the disclosure and as shown in Figures 3 and 4, the torsion bridge 238 and the flapper 228 are formed as a single integral component although they could be formed separately and then joined together, for example by welding to form an integral part. When formed as a single component, the flapper 228 and torsion bridge 238 could be manufactured by Laser Powder Bed Fusion.

The torque motor further comprises a first annular pole piece 242, centred on the longitudinal axis A'-A' and arranged parallel to and axially spaced from the armature plate 240, and a second annular pole piece 244 arranged parallel to and below the armature plate 240. The first subsystem 202 further comprises coils 246 wrapped around the armature plate 240 on either side and spaced from the centre thereof. Permanent magnets (not shown) are also provided on opposite sides of the armature plate 240 and extend axially between the first and second annular pole pieces 242, 244. The coils 130 are connected via lead wires (not shown) to a source of electricity (not shown) to thereby provide an electrical current to the coils 130.

The torque motor is an electromagnetic circuit such that in operation, current flowing through the coils 246 creates an electromagnetic force acting on the armature plate 240. The armature plate 240 is fixed to and supported on the torsion bridge 238 which extends perpendicular to the longitudinal axis A'-A' and perpendicular to the longitudinal axis (L'-L') of the armature plate 240.

The torsion bridge 238 twists when torque is applied to it in use and so the torsion bridge 238, armature plate 240 and flapper 228 rotate due to the current flowing through the coils 246. This rotation changes the position of the second end 234 of the flapper 228, moving it towards the supply 214 or return port 216 depending on the given current. In this position, the supply 214 or return 216 port is closed and fluid within the valve system 204 will flow from the control port 212 to the return port 216 for the closed supply port 214 or will flow from the supply port 214 to the control port 212 for the closed return port 216.

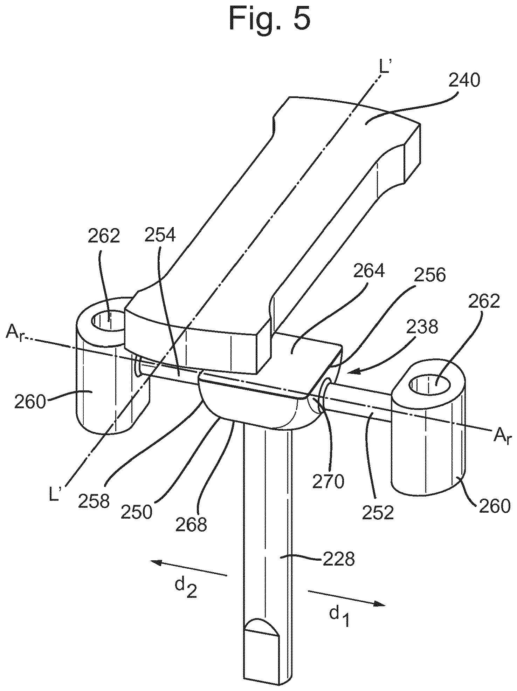

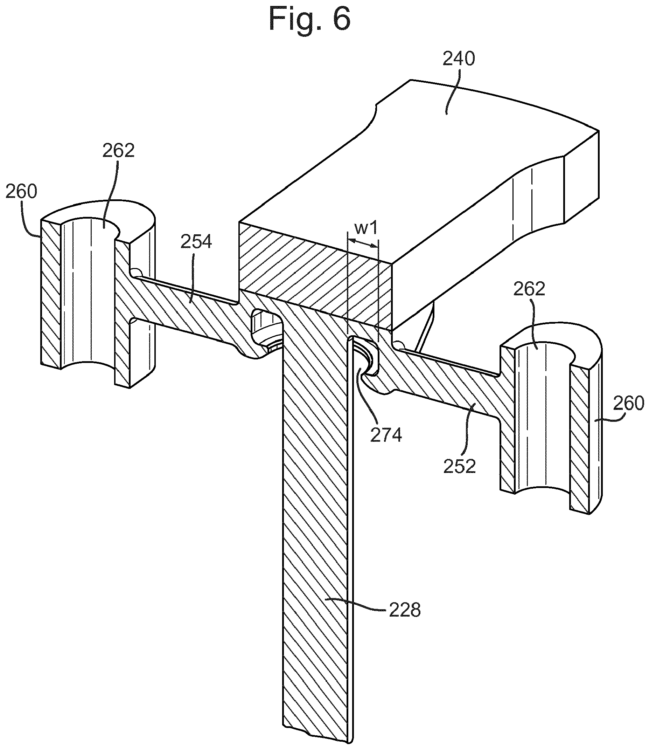

The torsion bridge 238 and flapper 228 of the example of Figures 3 and 4 are shown in further detail in Figures 5 and 6. The torsion bridge 238 comprises a main body 250 and a rotation axis Aᵣ extending through the main body 250, perpendicular to the longitudinal axis A'-A'. A first cylindrical torsion shaft 252 extends outwardly from a first side 256 of the main body 250 along the rotation axis Aᵣ in a first direction d₁. A second cylindrical torsion shaft 254 extends outwardly from a second side 258 of the main body 250, opposite the first side 256 along the rotation axis Aᵣ in a second direction d₂ opposite to the first direction d₁.

Solid bodies 260 having a cylindrical passage 262 extending therethrough in a direction parallel to the longitudinal axis A'-A' are provided at the outer end of each torsion shaft 252, 254. Anchoring means (255) extend through the cylindrical passages 262 and engage with the body 206 of the valve system 204 when the servovalve 200 is assembled so as to fix the solid bodies 260 relative to the valve system 204. The torsion bridge will twist about the axis of rotation Aᵣ in use.

As seen in Figures 3 and 4, the main body 250 of the torsion bridge 238 forms an integral part with the flapper 228. As seen in Figure 5, the integral part comprises a first rectangular planar surface 264 which is centred on the longitudinal axis A'-A'. When the servovalve 200 is assembled, the first rectangular planar surface 264 extends parallel and adjacent to a planar surface 266 of the armature plate 240. A direct connection is formed between the first rectangular planar surface 264 of the torsion bridge 238 and the surface 266 of the armature plate in contact therewith. In various examples, this connection could be formed by brazing, gluing or welding.

The main body 250 further comprises four side walls 268, 270, 272, not shown extending perpendicular to one another and parallel to the longitudinal axis A'-A' from each of the respective sides of the first rectangular planar surface 264. The flapper 228 (which is integral with the main body 250) extends along the longitudinal axis A'-A' away from the first rectangular planar surface 264. A hollow annular portion or recess 274 having a width w₁ is formed in the main body 250 between the flapper 228 and the four side walls 268, 270, 272, not shown. The hollow annular portion 274 is closed at a first longitudinal end by the first rectangular planar surface 264. At the other longitudinal end of the hollow annular portion 274, the side walls 268, 270, 272, not shown of the main body 250 curve inwardly towards the flapper 228.

When the servovalve 200 is assembled, the third cylindrical portion 226 of the hollow chimney 218 extends around the flapper 228 into the hollow annular portion 274. The side walls 268, 270, 272, not shown of the main body 250 curve inwardly towards the flapper 228 such that little or no gap is formed between the hollow chimney 218 and the side walls 268, 270, 272, not shown. An O-ring 276 placed in the hollow annular portion 274 forms a fluid-tight seal between the hollow chimney 218 and the side walls 268, 270, 272, not shown such that fluid cannot escape from the valve system 204.

In one example of the present disclosure, the hollow chimney 218 is concentric with the flapper 228 such that a radial gap between the hollow chimney 218 and the hollow annular portion 274 will be constant for a given point on the longitudinal axis A'-A'. Thus, the flapper 228 may be positioned by the O-ring 276, so as to prevent contact between the flapper 228 and the hollow chimney 218.

As the O-ring 276 contacts integral parts of the torsion bridge 238, twisting of the O-ring and possible consequent damage thereto are reduced.

When in situ, the O-ring 276 is in axial alignment with the axis of rotation Aᵣ of the torsion shafts 252, 254. Thus, the O-ring is provided at the same height (i.e. the same level on the longitudinal axis A'-A') as the axis of rotation Aᵣ. This provides static sealing and avoids twisting of the O-ring 276 when the torsion shafts 252, 254 rotate. This therefore protects the O-ring 276 as twisting of the O-ring 276 could result in damage thereto or could cause the seal created by the O-ring 276 to be broken.

It will also be appreciated by one skilled in the art that the provision of mating planar surfaces between the armature and the torsion bridge allows the connection therebetween, and particularly a brazed connection, to be made relatively quickly and inexpensively.

In addition, in the examples of the disclosure shown, no aperture is formed in the armature plate 240 such that, in use, a substantially constant magnetic flux density may be achieved across the full extent of the armature plate. This will mean that a greater torque will be achieved before saturation of the armature plate occurs than in prior art examples (such as the example of figure 1). Thus, the torque motor may behave in a linear manner for a wider range of torque values thus improving the performance of the servovalve of the disclosure.

A further outcome is that, as no aperture is required, the armature plate 240 will have a greater mechanical strength than the armature plate of the example of Figure 1. This will allow a torsion bridge with longer torsion shafts to be produced such that lower stresses are produced and fatigue life is increased. In addition, coils with a greater number of turns may be used in the torque motor as more space will be available due to the longer torsion shafts.

As longer torsion shafts may be provided and the torque motor may display greater linearity, it may be possible to produce a servovalve having a larger stroke than has previously been possible without adversely impacting performance thereof.

It will be appreciated by those skilled in the art that the present disclosure has been illustrated by describing one or more specific examples thereof, but is not limited to these examples; many variations and modifications are possible, within the scope of the accompanying claims.

## Claims

1. An assembly for use in a servovalve (200), the assembly comprising:
a moveable member (228) having a first end (232) and a second end (234), the moveable member (228) extending along a longitudinal axis (A'-A') from the first end (232) to the second end (234); and
a torsion bridge (238), the torsion bridge (238) extending around the moveable member (228) at the first end (232) thereof, and being adapted to rotate about a rotation axis (Aᵣ),
wherein the rotation axis (Aᵣ) extends perpendicular to the longitudinal axis (A'-A'), and
wherein the moveable member (228) and the torsion bridge (238) form an integral part having a planar surface (264) adapted to receive a planar surface (266) of an armature (240).

2. An assembly as claimed in claim 1, wherein the moveable member (228) and the torsion bridge (238) are formed as a single part.

3. An assembly as claimed in claim 1 or 2, wherein the assembly is adapted to receive a part of a valve system (204) of a servovalve (200) therein and to provide a seal between the part and the assembly when in-situ in a servovalve (200).

4. An assembly as claimed in claim 3, wherein the assembly is adapted to provide a seal between the part and the torsion bridge (238) when in-situ in a servovalve (200).

5. An assembly as claimed in any preceding claim, and further comprising an armature (240),
a first planar surface (266) of the armature (240) lying adjacent and parallel to the planar surface (264).

6. An assembly as claimed in claim 5, wherein the first planar surface (266) of the armature (240) is joined to the planar surface (264) by brazing.

7. An assembly as claimed in claim 5 or 6, the armature (240) comprising a solid body having a substantially constant cross section.

8. A servovalve (200) comprising an assembly as claimed in any preceding claim.

9. A servovalve (200) as claimed in claim 8 and further comprising a valve system (204) comprising a body (206) containing a fluid, the body (206) having a hollow chimney (218) extending along the longitudinal axis (A'-A'),
wherein the moveable member (228) extends into the hollow chimney, and
wherein a seal is provided between the hollow chimney and the torsion bridge (238).

10. A servovalve as claimed in claim 9, wherein the seal comprises an O-ring seal (276).

11. An assembly or servovalve (200) as claimed in any preceding claim, wherein the torsion bridge (238) comprises a recess (274) therein for receiving a seal.

12. An assembly or servovalve (200) as claimed in claim 11, wherein the torsion bridge (238) comprises:
a main body (250) extending around the first end of the moveable member (228);
a first torsion shaft (252) extending from the main body (250) along the rotation axis (Aᵣ) in a first direction; and
a second torsion shaft (254) extending from the main body (250) along the rotation axis (Aᵣ) in a second direction.

13. An assembly or servovalve (200) as claimed in claim 12, the main body (250) comprising:
a first surface comprising the planar surface (264); and
side walls (270, 272, 274) extending from the first surface,
wherein the moveable member (228) extends away from the first surface and the recess extends between the moveable member (228) and the side walls (270, 272, 274).

14. An assembly or servovalve (200) as claimed in claim 13, wherein the side walls (270, 272, 274) extend in a longitudinal direction from the first surface and then curve towards the moveable member (228).

15. An assembly or servovalve (200) as claimed in any of claims 11 to 14, wherein the moveable member is cylindrical and the recess is annular.
